(19) Europäisches Patentamt / European Patent Office / Office européen des brevets

(11) **EP 2 553 932 B1**

(12) **EUROPEAN PATENT SPECIFICATION**

(45) Date of publication and mention
of the grant of the patent:
**01.08.2018 Bulletin 2018/31**

(21) Application number: **11718173.5**

(22) Date of filing: **31.03.2011**

(51) Int Cl.:
***H04N 13/00*** *(2018.01)*

(86) International application number:
**PCT/US2011/000573**

(87) International publication number:
**WO 2011/123174 (06.10.2011 Gazette 2011/40)**

(54) **DISPARITY VALUE INDICATIONS**

ANGABE VON DISPARITÄTSWERTEN

INDICATIONS DE VALEUR DE DISPARITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2010 US 319973 P**

(43) Date of publication of application:
**06.02.2013 Bulletin 2013/06**

(73) Proprietor: **THOMSON Licensing
92130 Issy-les-Moulineaux (FR)**

(72) Inventor: **Redmann, William Gibbens
Glendale, CA 91205 (US)**

(74) Representative: **Perrot, Sébastien
Technicolor R&D France Snc
975, avenue des Champs Blancs
CS 17616
35576 Cesson-Sévigné Cedex (FR)**

(56) References cited:
EP-A2- 2 061 005          WO-A1-2008/139351
WO-A1-2010/007285      WO-A2-2007/052191
WO-A2-2009/125988      US-A1- 2009 142 041

• **You Yang, Mei Yu: "A Transmission and
Interaction Oriented Free-Viewpoint Video
System", INTERNATIONAL JOURNAL OF
CIRCUITS, SYSTEMS AND SIGNAL
PROCESSING, vol. 1, no. 4 31 December 2007
(2007-12-31), pages 310-316, XP002640920,
Retrieved from the Internet:
URL:www.naun.org/journals/circuitssystemss
ignal/cssp-52.pdf [retrieved on 2011-06-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATIONS

This application claims the benefit of the filing date of the following U.S. Provisional Application, which is hereby incorporated by reference in its entirety for all purposes: Serial No. 61/319,973, filed on April 1, 2010, and titled "Disparity Value Indications."

TECHNICAL FIELD

Implementations are described that relate to 3D. Various particular implementations relate to disparity maps for video contents.

BACKGROUND

Stereoscopic video provides two video images, including a left video image and a right video image. Depth and/or disparity information may be available for these two video images. The depth and/or disparity information may be used for a variety of processing operations on the two video images. WO2007/052191 discloses processing of depth information for a stereoscopic video, wherein the depth information may be incomplete due to occlusions. In this case, the incomplete depth data is identified and restored.

SUMMARY

The invention is defined by the appended claims. According to a general aspect, a stereo video and a dense disparity map corresponding to the stereo video are received, the disparity map including a sample that does not indicate an actual disparity value. Disparity information is determined according to the sample to indicate whether an actual disparity value that should correspond to the sample is less than or greater than a value. The stereo video is processed based on the disparity information to perform at least one of placing overlay information, adjusting 3D effects, generating warnings, and synthesizing new views.

The details of one or more implementations are set forth in the accompanying drawings and the description below. Even if described in one particular manner, it should be clear that implementations may be configured or embodied in various manners. For example, an implementation may be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

BRIEF DESCRIPTION OF THE DRAWINGS

FIG. 1 is a pictorial representation of an actual depth value for parallel cameras.
FIG. 2 is a pictorial representation of a disparity value.
FIG. 3 is a pictorial representation of the relationship between apparent depth and disparity.
FIG. 4 is a pictorial representation of convergent cameras.
FIG. 5 is a block diagram depicting an implementation adjusting the 3D effect.
FIG. 6 is a pictorial representation of converging cameras and a stereoscopic image pair from converging cameras.
FIG. 7 is a pictorial representation of a picture having objects with different disparity values.
FIG. 8 is a pictorial representation of a stereoscopic image pair whose exact disparity values are not known in the shadowed area.
FIG. 9 is a flow diagram depicting an example for generating a disparity map, in accordance with an embodiment of the present principles.
FIG. 10 is a flow diagram depicting an example for processing a disparity map to obtain disparity values or other disparity information, in accordance with an embodiment of the present principles.
FIG. 11 is a block diagram depicting an example of an image processing system that may be used with one or more implementations.
FIG. 12 is a block diagram depicting another example of an image processing system that may be used with one or more implementations.

DETAILED DESCRIPTION

As a preview of some of the features presented in this application, at least one implementation uses a sample in a disparity map to indicate a disparity value or other disparity information. When the exact disparity value is known and is within a prescribed range, the sample specifies the disparity value. Otherwise, the sample may indicate that a disparity value is greater or smaller than a predetermined value or a calculated value. The predetermined value may be the upper or lower limit of the prescribed range, a disparity value at a neighboring location, a specific value, or a disparity value at a specific location. The calculated value may be calculated based on one or more disparity values at other locations. The sample may also indicate that no information about the disparity value is available at the current location.

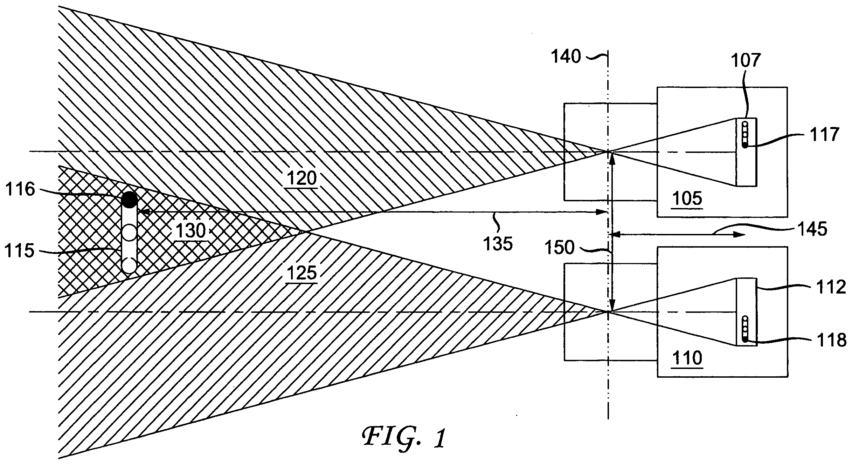

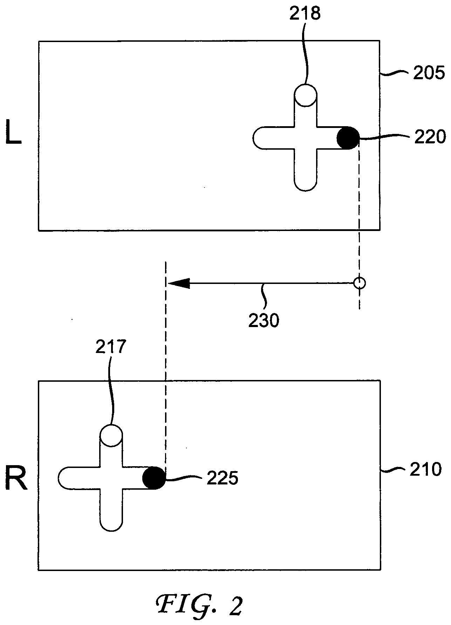

Stepping back from the above preview, FIG. 1 illustrates the concept of depth in a video image. FIG. 1 shows a right camera 105 with a sensor 107, and a left camera 110 with a sensor 112. Both cameras 105, 110 are capturing images of an object 115. For the purposes of illustration, object 115 is a physical cross, having an arbitrary detail 116 located on the right side of the cross (see FIG. 2). The right camera 105 has a capture angle 120, and the left camera 110 has a capture angle 125. The two capture angles 120, 125 overlap in a 3D stereo area 130.

Because the object 115 is in the 3D stereo area 130, the object 115 is visible to both cameras 105, 110, and therefore the object 115 is capable of being perceived as having a depth. The object 115 has an actual depth 135. The actual depth 135 is generally referred to as the distance from the object 115 to the cameras 105, 110. More specifically, the actual depth 135 may be referred to as the distance from the object 115 to a stereo camera baseline 140, which is the plane defined by the entrance pupil plane of both cameras 105, 110. The entrance pupil plane of a camera is typically inside a zoom lens and, therefore, is not typically physically accessible.

The cameras 105, 110 are also shown having a focal length 145. The focal length 145 is the distance from the exit pupil plane to the sensors 107, 112. For the purposes of illustration, the entrance pupil plane and the exit pupil plane are shown as coincident, when in most instances they are slightly separated. Additionally, the cameras 105, 110 are shown as having a baseline length 150. The baseline length 150 is the distance between the centers of the entrance pupils of the cameras 105, 110, and therefore is measured at the stereo camera baseline 140.

The object 115 is imaged by each of the cameras 105 and 110 as real images on each of the sensors 107 and 112. These real images include a real image 117 of the detail 116 on the sensor 107, and a real image 118 of the detail 116 on the sensor 112. As shown in FIG. 1, the real images are flipped, as is known in the art.

Depth is closely related to disparity. FIG. 2 shows a left image 205 captured from the camera 110, and a right image 210 captured from the camera 105. Both images 205, 210 include representation of the object 115 with detail 116. The image 210 includes an object image 217 of the object 115, and the image 205 includes an object image 218 of the object 115. The far right point of the detail 116 is captured in a pixel 220 in the object image 218 in the left image 205, and is captured in a pixel 225 in the object image 217 in the right image 210. The horizontal difference between the locations of the pixel 220 and the pixel 225 is the disparity 230. The object images 217, 218 are assumed to be registered vertically so that the images of detail 116 have the same vertical positioning in both the images 205, 210. The disparity 230 provides a perception of depth to the object 215 when the left and right images 205, 210 are viewed by the left and right eyes, respectively, of a viewer.

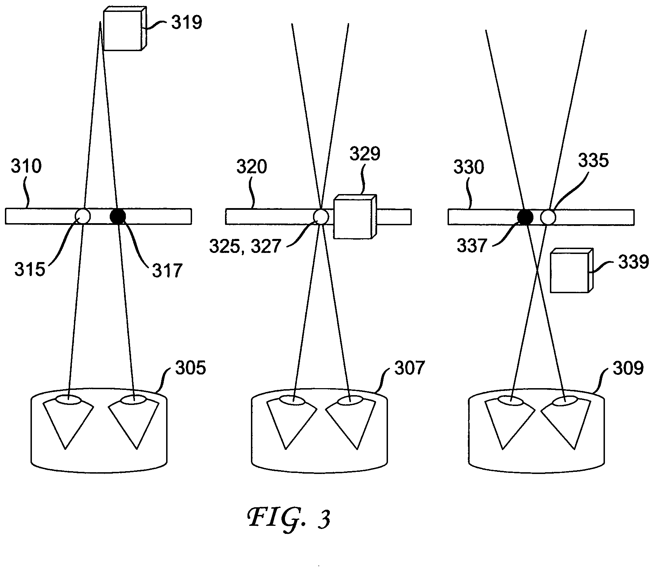

FIG. 3 shows the relationship between disparity and perceived depth. Three observers 305, 307, 309 are shown viewing a stereoscopic image pair for an object on a respective screens 310, 320, 330.

The first observer 305 views a left view 315 of the object and a right view 317 of the object that has a positive disparity. The positive disparity reflects the fact that the left view 315 of the object is to the left of the right view 317 of the object on the screen 310. The positive disparity results in a perceived, or virtual, object 319 appearing to be behind the plane of the screen 310.

The second observer 307 views a left view 325 of the object and a right view 327 of the object that has zero disparity. The zero disparity reflects the fact that the left view 325 of the object is at the same horizontal position as the right view 327 of the object on the screen 320. The zero disparity results in a perceived, or virtual, object 329 appearing to be at the same depth as the screen 320.

The third observer 309 views a left view 335 of the object and a right view 337 of the object that has a negative disparity. The negative disparity reflects the fact that the left view 335 of the object is to the right of the right view 337 of the object on the screen 330. The negative disparity results in a perceived, or virtual, object 339 appearing to be in front of the plane of the screen 330. Note that in FIG. 2, the pixel 225 in the right image is leftward of the pixel 220 in the left image, which gives disparity 230 a negative sign. Thus, object images 217 and 218 will produce the appearance that the object is closer than the screen (as object 339 appears closer than screen 330).

It is worth noting at this point, that disparity and depth can be used interchangeably in implementations unless otherwise indicated or required by context. Using Equation 1, we know disparity is inversely-proportional to scene depth.

$$D = \frac{f \cdot b}{d} \qquad (1)$$

where "D" describes depth (135 in FIG. 1), "b" is the baseline length (150 in FIG. 1) between two stereo-image cameras, "f" is the focal length for each camera (145 in FIG. 1), and "d" is the disparity for two corresponding feature points (230 in FIG. 2).

Equation 1 above is valid for parallel cameras with the same focal length. More complicated formulas can be defined for other scenarios but in most cases Equation 1 can be used as an approximation. Additionally, however, Equation 2 below is valid for converging cameras:

$$D = \frac{f \cdot b}{d_\infty - d} \qquad (2)$$

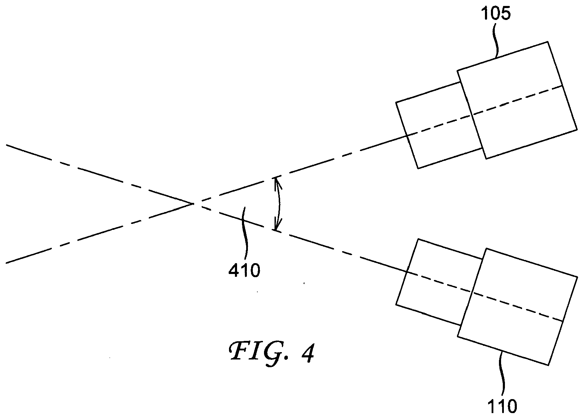

where $d_\infty$ is the value of disparity for an object at infinity. $d_\infty$ depends on the convergence angle and the focal length, and is expressed in meters (for example) rather than in the number of pixels. Focal length was discussed earlier with respect to FIG. 1 and the focal length 145. Convergence angle is shown in FIG. 4.

FIG. 4 includes the camera 105 and the camera 110 positioned in a converging configuration rather than the parallel configuration of FIG. 1. A convergence angle 410 shows the focal lines of the cameras 105, 110 converging.

Disparity maps are used to provide disparity information for a video image. A disparity map generally refers to a set of disparity values with a geometry corresponding to the pixels in the associated video image.

A dense disparity map generally refers to a disparity map with a spatial and a temporal resolution identical to the resolution of the associated video image. The temporal resolution refers, for example, to frame rate, and may be, for example, either 50 Hz or 60 Hz. A dense disparity map will, therefore, generally have one disparity sample per pixel location. The geometry of a dense disparity map will typically be the same as that of the corresponding video image, for example, a rectangle having a horizontal and vertical size, in pixels of:

    (i) 1920 x 1080 (or 1920 x 1200),

    (ii) 1440 x 1080 (or 1440 x 900),

    (iii) 1280 x 720 (or 1280 x 1024, 1280 x 960, 1280 x 900, 1280 x 800),

    (iv) 960 x 640 (or 960 x 600, 960 x 576, 960 x 540),

    (v) 2048 x 1536 (or 2048 x 1152),

    (vi) 4096 x 3072 (or 4096 x 3112, 4096 x 2304, 4096 x 2400, 4096 x 2160, 4096 x 768), or

    (vii) 8192 x 4302 (or 8192 x 8192, 8192 x 4096, 7680 x 4320).

It is possible that the resolution of a dense disparity map is substantially the same as, but different from the resolution of the associated image. In one example, when the disparity information at the image boundaries are difficult to obtain, one may choose not to include the disparity at the boundary pixels and the disparity map is smaller than the associated image.

A down-sampled disparity map generally refers to a disparity map with a resolution smaller than the native video resolution (for example, divided by a factor of four). A down-sampled disparity map will, for example, have one disparity value per block of pixels.

A sparse disparity map generally refers to a set of disparities corresponding with a limited number of pixels (for example 1000) that are considered to be easily traceable in the corresponding video image. The limited number of pixels that are selected will generally depend on the content itself. There are frequently upwards of one or two million pixels in an image (1280x720, or 1920x1080). The pixel subset choice is generally automatically or semi-automatically done by a tracker tool able to detect feature points. Tracker tools are readily available. Feature points may be, for example, edge or corner points in a picture that can easily be tracked in other images. Features that represent high contrast edges of an object are generally preferred for the pixel subset.

Disparity maps, or more generally, disparity information, may be used for a variety of processing operations. Such operations include, for example, view interpolation (rendering) for adjusting the 3D effect on a consumer device, providing intelligent subtitle placement, visual effects, and graphics insertion.

In one particular example, graphics are inserted into a background of an image. In an example, a 3D presentation can include a stereoscopic video interview between a sportscaster and a football player, both of whom are in the foreground. The background includes a view of a stadium. In this example, a disparity map is used to select pixels from the stereoscopic video interview when the corresponding disparity values are less than (that is, nearer than) a predetermined value. In contrast, pixels are selected from a graphic if the disparity values are greater than (that is, farther than) the predetermined value. This allows, for example, a director to show the interview participants in front of a graphic image, rather than in front of the actual stadium background. In other variations, the background is substituted with another environment, such as, for example, the playfield during a replay of the player's most recent scoring play.

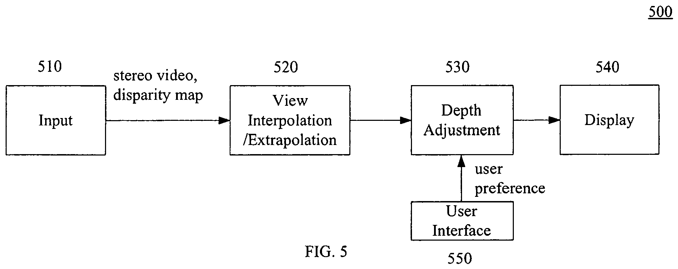

In one implementation, the 3D effect is softened (reduced) based on a user preference. To reduce the 3D effect (reduce the absolute value of the disparity), a new view is interpolated using the disparity and video images. For example, the new view is positioned at a location between the existing left view and right view, and the new view replaces one of the left view and the right view. Thus, the new stereoscopic image pair has a reduced disparity, and therefore a reduced 3D effect. In another implementation, extrapolation, though less commonly used, may be performed to exaggerate the apparent depth of the images. FIG. 5 illustrates an image processing system performing 3D effect adjustment. The system receives a stereo video and a disparity map at an input 510. New views are generated through view interpolation/extrapolation based on the stereo video and the disparity map in block 520. Each individual may have different tolerance/preference for the strength of 3D effect. That is, one individual may like a strong 3D effect while another may prefer a mild 3D effect. Such 3D tolerance/preference is received by a user interface 550 and conveyed to block 530 to adjust the depth accordingly. The adjusted stereo video is then output to a display 540.

In another implementation, disparity maps are used to intelligently position subtitles in a stereo video so as to reduce or avoid viewer discomfort. For example, a subtitle should generally have a perceived depth that is in front of any object that the subtitle is occluding. However, the perceived depth should generally have a depth that is comparable to the region of interest, and not too far in front of the objects that are in the region of interest.

For many 3D processing operations, a dense disparity map is preferred over a down-sampled disparity map or a sparse disparity map, for example, when a disparity map is used to enable user controllable 3D effects. In such operations, disparity information per pixel is needed to achieve good results, because using a sparse or down-sampled disparity map may degrade the quality of the synthesized views.

A disparity value may be represented in a variety of formats. Several implementations use the following format to represent a disparity value for storage or transmission:

- Signed integer: 2s complement

  • Negative disparity values indicate depth that is in front of the screen.

  • Zero is used for disparity value for objects in the screen plane.

- Units of 1/8 pixel

- 16 bits to represent the disparity value

  • A typical disparity range varies between +80 and -150 pixels. This is generally sufficient on a forty inch display of 1920 or 2048 pixels horizontal resolution.

  • With 1/8 pixel accuracy, the range is between +640 and -1200 units, which can be represented by 11 bits +1 bit for the sign = 12 bits

  • To keep the same 3D effect on an 8K display (which would have about four times the horizontal resolution of a 1920- or 2048-pixel wide display), we typically need two additional bits to code the disparity:

$$12+2 = 14 \text{ bits}$$

  • This provides 2 bits for future use

Further, various implementations that use the above format also provide for a dense disparity map. Thus, to complete a dense disparity map for such implementations, the above 16-bit format is provided for every pixel location in a corresponding video image.

As mentioned above, a typical disparity range varies between +80 and -150 pixels. Assume an interocular (i.e., distance between the eyes) of 65 mm, the interocular is measured at about 143 pixels for a forty inch display with a spatial resolution of 1920 x 1080. The positive disparity bound corresponds to a far-depth about as far behind the screen as the viewer is in front of the screen since +80 is about half the interocular measure. The negative disparity bound corresponds to a near-depth of about half-way between the viewer and the screen since the negative disparity bound is roughly equal to the interocular measure. This range is generally sufficient for a forty inch display. However, the disparity may exceed the normally sufficient limits where a stereo video is either badly shot or contains 3D special effect.

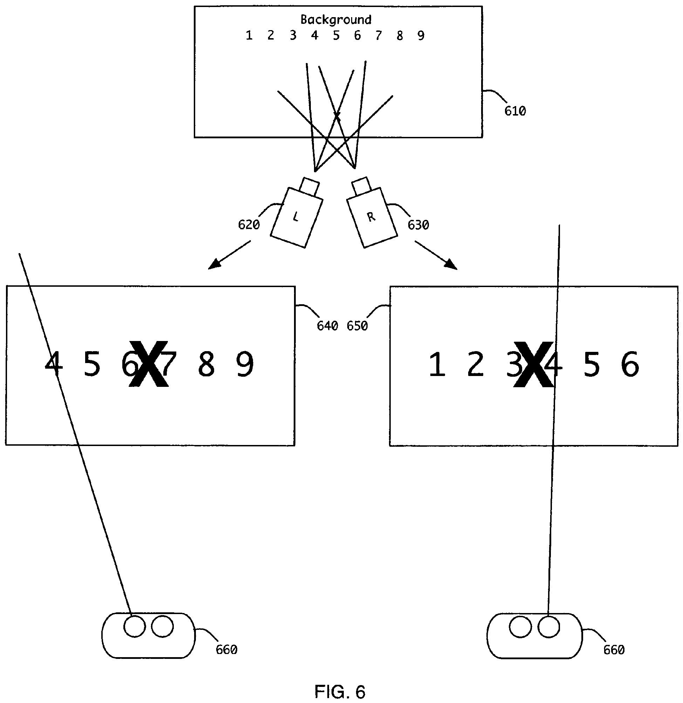

FIG. 6 illustrates an example of positive overflows (for example, a disparity value is greater than +80 pixels) when a scene 610 is shot with converging cameras 620 and 630. The scene 610 includes an object shown as an "X" in the foreground and the numbers 1-9 in the background. The object "X" is captured by left camera 620 with a background between "6" and "7" in the left image 640, and is captured by right camera 630 between "3" and "4" in the right image 650. If the user 660 decides to focus on "4", the user's right eye would shift slightly to the right (as shown in conjunction with the numeral "4" in right image 650) and the user's left eye would shift significantly to the left (as shown in conjunction with the numeral "4" in left image 640). This results in a divergence of the eyes beyond parallel. That is, the disparity of the background numeral "4" is greater than the interocular measure of user 660 and the positive disparity bound, and its exact disparity value cannot be specified by the disparity map format discussed above. That is, the disparity value "overflows" the representation of that format, further the overflow is in the positive direction, i.e., the true disparity value is greater than the maximum positive disparity allowed by the representation.

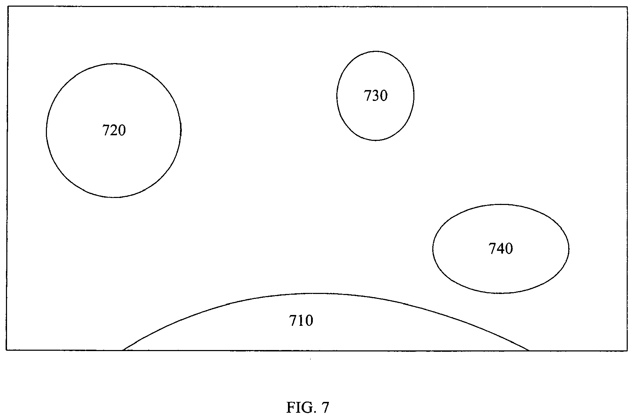

FIG. 7 illustrates an example of negative overflows (for example, a disparity value is less than -150 pixels). FIG. 7 shows a picture including objects 710, 720, 730, and 740. At the bottom of the picture is object 710 having a disparity of -195 pixels, indicating that object 710 pops out toward the viewer. Object 720 is at the screen level, having a disparity of substantially zero, while objects 730 and 740 have respective disparities +10 and -10, both within the range of +80 to -150 pixels from the format discussed above. In this picture, object 710 has a disparity of -195 pixels, which exceeds the negative disparity bound. Similar to the example illustrated in FIG. 6, the exact disparity value of object 710 cannot be specified by the format for disparity map representation discussed above.

Note the range of +80 to -150 pixels is used in the above examples to illustrate that a disparity may exceed the prescribed disparity range. However, either the end values of the range or the size of the range itself may be varied in various disparity map formats. In one example, presentations in theme parks may require a more severe negative disparity (i.e., objects coming closer than half-way out from the screen) for more dramatic effects. In another example, a professional device may support a wider range of disparity than a consumer device.

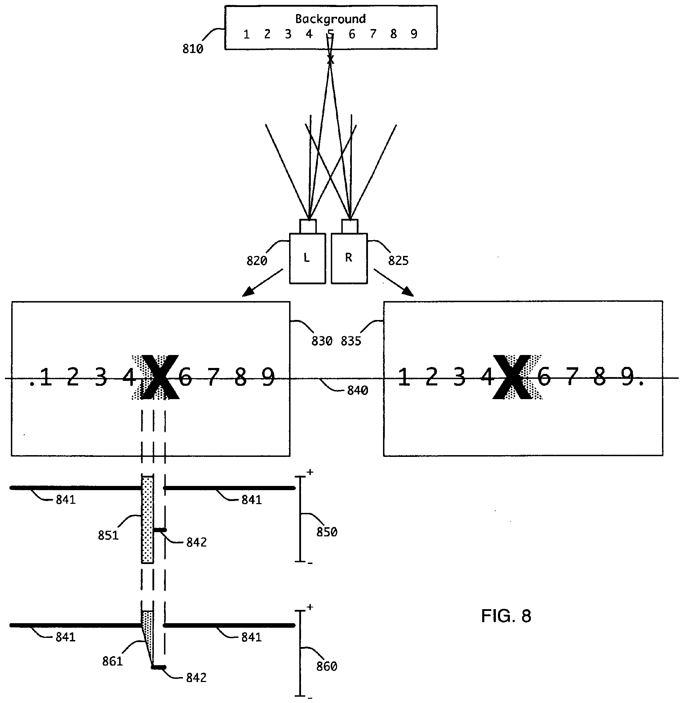

It is well known to those skilled in the art that exact disparity values may be determined from the stereo video and other inputs (for example, correlation with prior or later image pairs). That is, the actual disparity value can be determined with a sufficiently high degree of confidence. However, it is possible that the confidence level is very low and the exact disparity value is effectively "unknown". For example, the exact value of a disparity may be unknown at the edges of a screen or in a shadowed area caused by occlusion. When an unknown disparity is caused by occlusion, the limits on the disparity can be derived even though the exact disparity value is unknown. FIG. 8 showing parallel left and right cameras provides such an example.

FIG. 8 includes an example where occlusion occurs when a scene 810 is shot with parallel left and right cameras 820 and 825, respectively. The scene 810 includes an object shown as an "X" in the foreground and the numbers 1-9 in the background. Left camera 820 captures the scene 810 in the left image 830, and right camera 825 in the right image 835. The shaded areas around the "X" in images 830 and 835 shows the portions of scene 810 that cannot be seen by the other camera. For example, the left image 830 shows a shaded area that can be seen by the left camera 820 but not by the right camera 825 because the "X" blocks that portion of the image from the right camera 825. Thus, no disparity can be calculated exactly for the shaded portions.

Plots 850 and 860 show two representations of disparity information for left image 830 along the horizontal line 840. The disparity values 841 correspond to the disparity of the background (i.e., the numerals 1-9) wherever the background is visible along centerline 840. The disparity value 841, in this example, is less than the maximum positive disparity value allowed by the example format above. The disparity value 842 corresponds to the disparity of the "X" along centerline 840, which since the "X" is in the foreground, is more negative (likewise, less positive) than disparity values 841.

However, due to the occlusion illustrated by the shaded "X" in left image 830, for which there is no correlate in right image 835, the actual disparity value in that region cannot be determined and thus in plot 850, unknown values 851 are shown, which represents the possibility of any value from the positive extreme value to the negative extreme value that can be represented in the example format, additionally including the possibility of positive or negative overflows.

However, disparity constraints can be derived to provide more information on the disparity for the shaded portions. Given the viewing angle of the right camera 825, for example, it is known that the disparity at any given occluded point in image 830, though unknown, will be greater (more receded into the background) than a straight line interpolation between the known disparities at the left and right of the occluded region. This follows because, if the disparity were less (i.e., closer) than the straight line interpolation, then the location would pop out toward the viewer and would have been visible to the camera 825. Thus, in plot 860, the constraints on the disparity values 861 are shown, which represent the possibility of any value from the positive extreme value (and additionally a positive overflow) to a disparity value that is greater than or equal to that of 842. The disparity values 861 must be greater than or equal to a linearly increasing value that equals to that of 841 at the leftmost edge of the occluded region and equals to that of 842 at the rightmost. Additionally, in some circumstances, a similar bound may exist on the positive end of the disparity (e.g., in a case where the "X" is skinny, not shown). That is, the unknown disparity values 861 in the occluded region cannot have a disparity that is too great, otherwise it may recede so far into the background that it would be visible on the other side of the "X" by the right camera.

Thus, when the exact disparity value is unknown, we can still provide indications that the disparity is between certain values or greater than (or less than) certain values. Such disparity information can be used when placing a subtitle. For example, if a subtitle needs to be placed in 3D in the center of scene 810, then given plot 850, one would have to put the subtitle somewhere else to avoid the occluded area, since the "unknown" disparity values 851 might interpenetrate the subtitle and make a bad presentation. However, when the disparity values are unknown, but constrained, as are those of 861, the subtitle might be safely placed at disparity 842 (or slightly less, i.e., more forward), without fear of bad presentation. Thus, unknown disparity representation 851 needlessly interferes with subtitle placement (don't place it here), while unknown-but-constrained disparity representation 861 can be more effectively used.

Note that in plots 850 and 860, the vertical axis is intended to be the range of disparities, e.g., +80 to -150 pixels, or between the positive and negative disparity bounds specified by the disparity map format, or other values suggested by the "+" and "-" signs.

Using a disparity range of +80 to -150 pixels and FIGS. 6-8 as examples, it is illustrated that when the range is fixed for a disparity map format, there may be instances where the disparity is not known precisely or does not lie within the prescribed range. In these instances, it is useful to provide some disparity information in a disparity map even though the exact disparity value cannot be specified. In one such implementation, the disparity sample at a given location of the disparity map could simply indicate that the actual disparity value is "unknown". As discussed above, for example, such information can be used to avoid inserting subtitles there since they might interfere with something in the image.

Other implementations, however, may provide more granularities and more information than simply indicating "unknown" disparity. Because the actual value of the disparity or the constraint on the disparity is known in some conditions, other indications can be used to provide additional information. The indications may be provided, for example, using pre-determined values that otherwise would not be used when specifying a particular disparity value. A processor can then determine information relating to samples that do not indicate an actual disparity value by correlating the pre-determined values to their respective corresponding information.

Other possible indications include, for example:

(i) positive overflow (for example, greater than the positive disparity bound);

(ii) negative overflow (for example, less than the negative disparity bound);

(iii) less or more than the disparity value at another location (for example, a pixel location);

- less than the disparity value at the location to the left;

- less than the disparity value at the location to the right;

- more than the disparity value at the location to the left;

- more than the disparity value at the location to the right;

(iv) less or more than the a specific calculated disparity value;

- less than a disparity value that is an interpolation between two other known disparity values;

- more than a disparity value that is an interpolation between two other known disparity values;

(v) between two disparity values (one or more of the disparity values may be, for example, for specific locations, or may be specific values that are calculated or otherwise known or determined).

Other indications, such as, for example, the ones listed above, may be used for a variety of applications. Such applications include, for example, placing overlay information, adjusting 3D effects, synthesizing new views, and generating warnings.

### Placing overlay information

If the "unknown" disparity is actually known to be in the background (a "positive overflow"), then it would generally be acceptable to place a subtitle over that portion of the image. However, if the "unknown" disparity is actually in the foreground (a "negative overflow"), then it would generally be uncomfortable for the viewer to have a subtitle placed in that portion of the image. These other indications, such as, for example, "positive overflow", allow the designer more information to use in determining appropriate locations for subtitles as well as other features that overlay on the image or otherwise shown to the user. Such other features may include menu selections, volume level and other controls or system configuration displays, additional windows or regions for displaying information to the user, etc.

### Adjusting 3D effects

Some users may prefer to have 3D effects enhanced or reduced, as illustrated in FIG. 5. For example, if a user is sensitive to 3D effects, then the user may not want to have objects appear to jump out of the screen more than 25% or 50% of the distance toward the user. Accordingly, a display or set-top box may attenuate the 3D effects based on the user preference and disparity values. However, an "unknown" disparity value makes reduction of the 3D effect ambiguous, whereas a constrained value for the disparity makes it less so. In contrast, the use of "negative overflow" would indicate a more extreme case where the object is popping out at the user and, accordingly, that the user would prefer to have the disparity modified so that the 3D effect is reduced.

### Synthesizing new views

As illustrated by the example in FIG. 8, often the disparity value for locations near foreground objects cannot be determined because either the left or right image is occluded by the foreground object. Due to the occlusion, the disparity estimation procedure cannot find the corresponding locations in both the left and right images. This makes it more difficult to render (synthesize) new views. However, for such locations, there is often a great amount of information available on the disparity, even though the actual disparity may be unknown. Additional information, such as constraints on the disparity, provides more disparity cues for view synthesis.

### Generating warnings

Extreme disparity values may create uncomfortable 3D effects. If a disparity is simply labeled "unknown", then it is not clear to a post-production operator (such as, for example, a stereographer) whether the disparity will create an uncomfortable 3D effect or not. Using more granular indications may provide useful information to a stereographer, in the form of a warning, for example, to allow the stereographer to adjust the 3D effect if desired. FIG. 6 provides an example in which a user is looking at a close-up foreground object shot with cameras angling toward each other. The user may then decide to look at a background object that would result in the user's eyes diverging. Such divergence may be uncomfortable to a user, and a stereographer may decide to modify the disparity if the stereographer receives a warning. An indication of "positive overflow" may provide the stereographer with such a warning. Additionally, the warning may be premised on the occurrence of "positive overflow" and the fact that the stereoscopic image pair was captured with converging cameras.

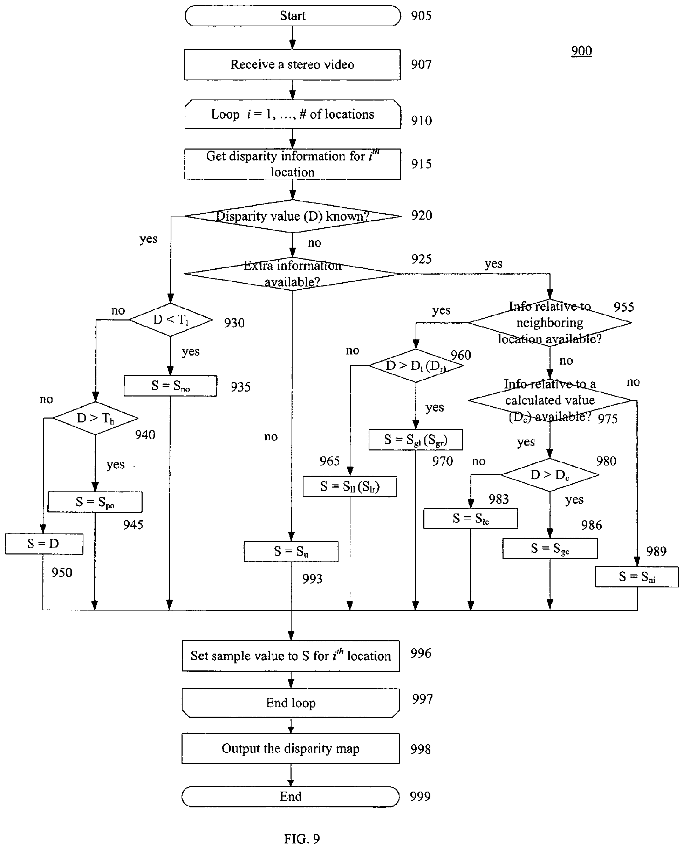

FIG. 9 illustrates by an example how a disparity map is generated in accordance with one embodiment. In this method, the disparity information at each location of the disparity map is considered. As discussed above, the disparity information to be considered is not confined to the exact disparity values. According to the principles of this invention, constraints on the disparity values are exploited and indicated in the disparity map. That is, the disparity information to be considered includes all available information on the disparity, for example, the exact disparity value, the constraints on the disparity values as described in FIG. 8. Moreover, when the exact disparity value is known but it is so large or small that it is beyond the prescribed disparity value range, the disparity map format in the present invention also captures such information and provides indications accordingly in the disparity map. The indications are provided using predetermined values that otherwise would not be used when specifying a particular disparity value. That is, when the exact disparity value is known and within a prescribed range at a particular location, the sample value is set to the disparity value. Otherwise, the sample value is set according to the available disparity information. A disparity map is generated when the sample values for all locations are set.

Turning to FIG. 9, an exemplary method for generating a disparity map based on the disparity value or other disparity information is indicated generally by the reference number 900. The method 900 includes a start block 905 that passes control to a function block 907. Block 907 receives a stereo video. A loop limit block 910 begins a loop over each location in the disparity map, using a variable $i$ = 1, ..., # of locations. The disparity information for the $i^{th}$ location is obtained in a function block 915. The disparity information may be provided as an input, or may be determined from the stereo video. Block 920 checks whether the disparity value (D) is known or not. If the disparity value is known, block 930 checks whether the disparity value is less than the negative limit $T_l$. If D is less than $T_l$, a variable S is set to $S_{no}$ to indicate "negative overflow" in a function block 935. If D is not less $T_l$, block 940 compares D with the positive limit $T_h$. If D is greater than $T_h$, S is set to $S_{po}$ to indicate "positive overflow" in a function block 945. If D is not greater than $T_h$ (i.e., D lies within the range), S is set to the disparity value D in a function block 950.

If the exact disparity value is not specified, block 925 checks whether other information about the disparity is available. If no other information is available, S is set to $S_u$ to indicate "unknown" in a function block 993.

If there is other disparity information, block 955 checks whether disparity information relative to the neighboring locations (left and right) is available or not. If the information of neighboring locations is available, block 960 checks whether D is greater than the disparity value to its left ($D_l$) or right ($D_r$). If D is greater than $D_l$ ($D_r$), S is set to $S_{gl}$ ($S_{gr}$) to indicate a disparity value that is greater than that at the location to the left (right) in a function block 970. If D is not greater than $D_l$ ($D_r$), S is set to $S_{ll}$, ($S_{lr}$) to indicate a disparity value that is not greater than that at the location to the left (right) in a function block 965. If the information relative to the neighboring locations is unavailable, block 975 checks whether disparity information relative to a calculated value ($D_c$) is available. The calculated value, for example, can be an interpolation between two other known disparity values. If information relative to a calculated value $D_c$ is available, block 980 checks whether D is greater than $D_c$ or not. If D is greater than $D_c$, S is set to $S_{gc}$ to indicate a disparity value greater than a calculated value in a function block 986. If D is not greater than $D_c$, S is set to $S_{lc}$ to indicate a disparity value less than a calculated value in a function block 983. If no information relative to $D_c$ is available, S is set to $S_{ni}$ in a function block 989 to indicate information not included in the above blocks.

After the variable S is obtained for different situations, the sample value is set to S at the $i^{th}$ location in the disparity map in a function block 996. Block 997 closes the loop. Block 998 outputs the disparity map and passes control to an end block 999.

Alternatively, less or more disparity information than FIG. 9 can be considered in various implementations. For example, a method may only indicate the disparity bounds. In another example, a method can further consider whether a disparity value is less or more than a specified value or a disparity value at a specified location. In yet another example, a method can further consider whether the stereo video is captured with parallel or converging cameras. One skilled in the art would readily contemplate various other ways to indicate disparity information given the teachings of the present principles.

As discussed before, a typical disparity range can be between +80 and -150 pixels. That is, $T_l$ = -150 pixels and $T_h$ = +80 pixels. To indicate the disparity information other than the disparity value, values outside +80 and -150 pixels are used. For example, $S_{no}$ = 81, $S_{po}$ = 82, $S_u$ = 83, $S_{gl}$ = 84, $S_{gr}$ = 85, $S_{ll}$ = 86, $S_{lr}$ = 87, $S_{gc}$ = 88, $S_{lc}$ = 89, and $S_{ni}$ = 90, as summarized in TABLE 1. The representation may also offset the sample values by 150 pixels to give a range of 0 - 230, resulting $T_l$ = 0, $T_h$ = 230, and leaving 231 - 240 for indications. Those skilled in the art may contemplate other representations by, for example, offsetting with other values or scaling.

TABLE 1. An example on the values for the disparity bounds and indications.

| | $T_l$ | $T_h$ | $S_{no}$ | $S_{po}$ | $S_u$ | $S_{gl}$ | $S_{gr}$ | $S_{ll}$ | $S_{lr}$ | $S_{gc}$ | $S_{lc}$ | $S_{ni}$ |
|---|---|---|---|---|---|---|---|---|---|---|---|---|
| Values (pixels) | -150 | 80 | 81 | 82 | 83 | 84 | 85 | 86 | 87 | 88 | 89 | 90 |

When the disparity bounds are different, other values should be used for $T_l$ and $T_h$ to reflect the difference, and the values to indicate other disparity information should also be set accordingly.

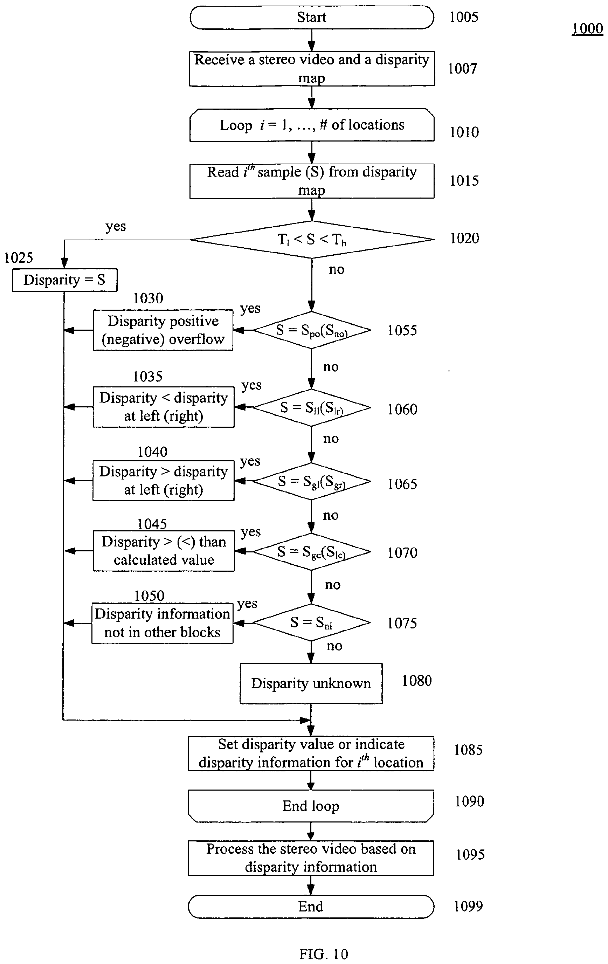

FIG. 10 illustrates how a disparity map generated according to FIG. 9 can be parsed to determine the disparity value or other disparity information. In this method, the sample at each location of the disparity map is parsed to output either a disparity value or other disparity information. That is, when the sample value at the current location is within the disparity range, the sample value is taken as the disparity value; otherwise the sample value is compared with predetermined conditions to provide the disparity information.

Turning to FIG. 10, an exemplary method for parsing a disparity is indicated generally by the reference number 1000. The method 1000 includes a start block 1005 that passes control to a function block 1007. Block 1007 receives a stereo video and a corresponding disparity map. A loop limit block 1010 begins a loop over each location in the disparity map, using a variable $i$ = 1, ..., # of locations. The sample at the $i^{th}$ location is read in a function block 1015. Block 1020 checks whether the sample value (S) is between the range of $T_l$ and $T_h$. If S is within the range, the disparity value is set to S in a function block 1025. If S does not lie within the range, block 1055 checks whether S equals to $S_{po}$ or $S_{no}$. If S equals to $S_{po}$ or $S_{no}$, the disparity information is indicated as "positive overflow" or "negative underflow" in a function block 1030. That is, the actual disparity value that should correspond to the sample is greater than the positive disparity bound ("positive overflow") or smaller than the negative disparity limit ("negative overflow"). If S does not equal to $S_{po}$ or $S_{no}$, block 1060 checks whether S equals to $S_{ll}$ or $S_{lr}$. If S equals to $S_{ll}$ or $S_{lr}$, the disparity value is indicated to be less than that at the location to the left or right in a function block 1035. If S does not equal to $S_{ll}$ or $S_{lr}$, block 1065 checks whether S equals to $S_{gl}$ or $S_{gr}$. If S equals to $S_{gl}$ or $S_{gr}$, the disparity value is indicated to be greater than that at the location to the left or right in a function block 1040. If S does not equal to $S_{gl}$ or $S_{gr}$, block 1070 checks whether S equals to $S_{gc}$ or $S_{lc}$. If S equals to $S_{gc}$ or $S_{lc}$, the disparity value is indicated to be greater than or less than a calculated value in a function block 1045. The calculated value is calculated using the same calculation as what is used in the disparity map generation. If S does not equal to $S_{gc}$ or $S_{lc}$, block 1075 checks whether S equals to $S_{ni}$. If S equals to $S_{ni}$, the disparity information is indicated to have information that is not included in the above blocks. The meaning of such information indicated in block 1050 should be identical to its meaning when the disparity map is generated (FIG. 9, 989). If S does not equal to $S_{ni}$, the disparity value is indicated to be unknown. After the sample at the $i^{th}$ location is parsed, either the disparity value or other disparity information is determined for the $i^{th}$ location. Block 1090 closes the loop. Block 1095 processes the stereo video based on the determined disparity value or other disparity information and passes control to an end block 1099.

Note the disparity map parsing is usually reciprocal to the disparity map generation. For example, the same disparity bounds should be used and indications for other disparity information should have the same meanings, during generating and parsing the disparity maps. When operations, such as offsetting or scaling, are used to generate the disparity map, extra reverse steps should be used during the parsing. As discussed above, there are various possible implementations to generate the disparity map, accordingly there are also various corresponding implementation to parse the disparity map.

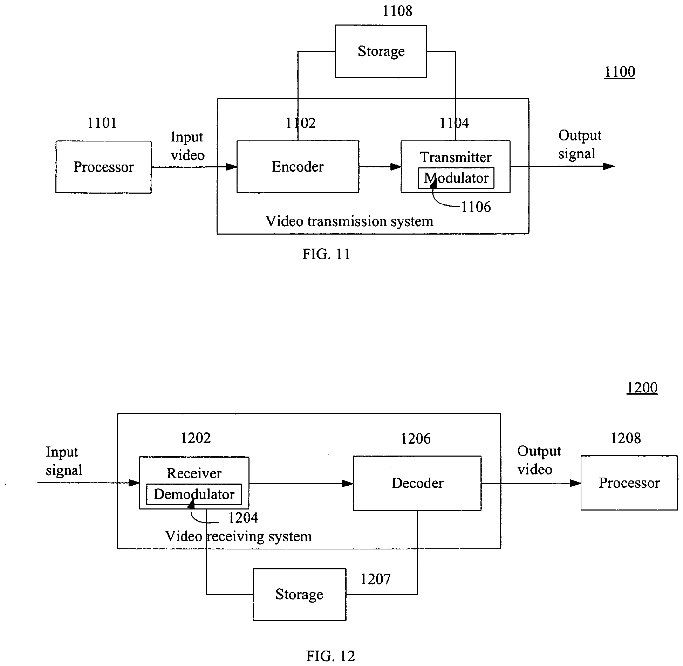

Referring now to FIG. 11, a video transmission system or apparatus 1100 is shown, to which the features and principles described above may be applied. The video transmission system or apparatus 1100 may be, for example, a head-end or transmission system for transmitting a signal using any of a variety of media, such as, for example, satellite, cable, telephone-line, or terrestrial broadcast. The video transmission system or apparatus 1100 also, or alternatively, may be used, for example, to provide a signal for storage. The transmission may be provided over the Internet or some other network. The video transmission system or apparatus 1100 is capable of generating and delivering, for example, video content and other content such as, for example, indicators of depth including, for example, depth and/or disparity values. It should also be clear that the blocks of FIG. 11 provide a flow diagram of a video transmission process, in addition to providing a block diagram of a video transmission system or apparatus.

The video transmission system or apparatus 1100 receives input stereo video and a disparity map from a processor 1101. In one implementation, the processor 1101 processes the disparity information to generate a disparity map according to the method described in FIG. 9 or other variations. The processor 1101 may also provide metadata to the video transmission system or apparatus 1100 indicating, for example, the resolution of an input image, the disparity bounds, and which types of disparity information is considered.

The video transmission system or apparatus 1100 includes an encoder 1102 and a transmitter 1104 capable of transmitting the encoded signal. The encoder 1102 receives video information from the processor 1101. The video information may include, for example, video images, and/or disparity (or depth) images. The encoder 1102 generates an encoded signal(s) based on the video and/or disparity information. The encoder 1102 may be, for example, an AVC encoder. The AVC encoder may be applied to both video and disparity information. AVC refers to the existing International Organization for Standardization/International Electrotechnical Commission (ISO/IEC) Moving Picture Experts Group-4 (MPEG-4) Part 10 Advanced Video Coding (AVC) standard/International Telecommunication Union, Telecommunication Sector (ITU-T) H.264 Recommendation (hereinafter the "H.264/MPEG-4 AVC Standard" or variations thereof, such as the "AVC standard", the "H.264 standard", or simply "AVC" or "H.264"). When both the stereo video and the disparity map are encoded, they may use the same encoder under the same or different encoding configurations, or they may use different encoders, for example, and AVC encoder for the stereo video and a lossless data compressor for the disparity map.

The encoder 1102 may include sub-modules, including for example an assembly unit for receiving and assembling various pieces of information into a structured format for storage or transmission. The various pieces of information may include, for example, coded or uncoded video, coded or uncoded disparity (or depth) values, and coded or uncoded elements such as, for example, motion vectors, coding mode indicators, and syntax elements. In some implementations, the encoder 1102 includes the processor 1101 and therefore performs the operations of the processor 1101.

The transmitter 1104 receives the encoded signal(s) from the encoder 1102 and transmits the encoded signal(s) in one or more output signals. The transmitter 1104 may be, for example, adapted to transmit a program signal having one or more bitstreams representing encoded pictures and/or information related thereto. Typical transmitters perform functions such as, for example, one or more of providing error-correction coding, interleaving the data in the signal, randomizing the energy in the signal, and modulating the signal onto one or more carriers using a modulator 1106. The transmitter 1104 may include, or interface with, an antenna (not shown). Further, implementations of the transmitter 1104 may be limited to the modulator 1106.

The video transmission system or apparatus 1100 is also communicatively coupled to a storage unit 1108. In one implementation, the storage unit 1108 is coupled to the encoder 1102, and stores an encoded bitstream from the encoder 1102. In another implementation, the storage unit 1108 is coupled to the transmitter 1104, and stores a bitstream from the transmitter 1104. The bitstream from the transmitter 1104 may include, for example, one or more encoded bitstreams that have been further processed by the transmitter 1104. The storage unit 1108 is, in different implementations, one or more of a standard DVD, a Blu-Ray disc, a hard drive, or some other storage device.

Referring now to FIG. 12, a video receiving system or apparatus 1200 is shown to which the features and principles described above may be applied. The video receiving system or apparatus 1200 may be configured to receive signals over a variety of media, such as, for example, storage device, satellite, cable, telephone-line, or terrestrial broadcast. The signals may be received over the Internet or some other network. It should also be clear that the blocks of FIG. 12 provide a flow diagram of a video receiving process, in addition to providing a block diagram of a video receiving system or apparatus.

The video receiving system or apparatus 1200 may be, for example, a cell-phone, a computer, a set-top box, a television, or other device that receives encoded video and provides, for example, decoded video signal for display (display to a user, for example), for processing, or for storage. Thus, the video receiving system or apparatus 1200 may provide its output to, for example, a screen of a television, a computer monitor, a computer (for storage, processing, or display), or some other storage, processing, or display device.

The video receiving system or apparatus 1200 is capable of receiving and processing video information, and the video information may include, for example, video images, and/or disparity (or depth) images. The video receiving system or apparatus 1200 includes a receiver 1202 for receiving an encoded signal, such as, for example, the signals described in the implementations of this application. The receiver 1202 may receive, for example, a signal providing one or more of the stereo video and/or the disparity image, or a signal output from the video transmission system 1100 of FIG. 11.

The receiver 1202 may be, for example, adapted to receive a program signal having a plurality of bitstreams representing encoded pictures. Typical receivers perform functions such as, for example, one or more of receiving a modulated and encoded data signal, demodulating the data signal from one or more carriers using a demodulator 1204, de-randomizing the energy in the signal, de-interleaving the data in the signal, and error-correction decoding the signal. The receiver 1202 may include, or interface with, an antenna (not shown). Implementations of the receiver 1202 may be limited to the demodulator 1204.

The video receiving system or apparatus 1200 includes a decoder 1206. The receiver 1202 provides a received signal to the decoder 1006. The signal provided to the decoder 1206 by the receiver 1202 may include one or more encoded bitstreams. The decoder 1206 outputs a decoded signal, such as, for example, decoded video signals including video information. The decoder 1206 may be, for example, an AVC decoder.

The video receiving system or apparatus 1200 is also communicatively coupled to a storage unit 1207. In one implementation, the storage unit 1207 is coupled to the receiver 1202, and the receiver 1202 accesses a bitstream from the storage unit 1207. In another implementation, the storage unit 1207 is coupled to the decoder 1206, and the decoder 1206 accesses a bitstream from the storage unit 1207. The bitstream accessed from the storage unit 1207 includes, in different implementations, one or more encoded bitstreams. The storage unit 1207 is, in different implementations, one or more of a standard DVD, a Blu-Ray disc, a hard drive, or some other storage device.

The output video from the decoder 1206 is provided, in one implementation, to a processor 1208. The processor 1208 is, in one implementation, a processor configured for performing disparity map parsing such as that described, for example, in FIG. 10. In some implementations, the decoder 1206 includes the processor 1208 and therefore performs the operations of the processor 1208. In other implementations, the processor 1208 is part of a downstream device such as, for example, a set-top box or a television.

Note that at least one implementation indicates information about the disparity, when the actual disparity value cannot be specified. For example, a system indicates a disparity that is greater or less than a value, for example, the disparity positive bound, the negative bound, a disparity value at a neighboring location or a specified location, or a calculated value. Additional implementations may provide more disparity information, therefore providing more cues for subsequent processing.

Disparity may be calculated, for example, in a manner similar to calculating motion vectors. Alternatively, disparity may be calculated from depth values, as is known and described above.

We thus provide one or more implementations having particular features and aspects. In particular, we provide several implementations relating to disparity maps. Disparity maps may allow a variety of applications, such as, for example, a relatively complex 3D effect adjustment on a consumer device, and a relatively simple sub-title placement in post-production. However, variations of these implementations and additional applications are contemplated and within our disclosure, and features and aspects of described implementations may be adapted for other implementations.

Several of the implementations and features described in this application may be used in the context of the AVC Standard, and/or AVC with the MVC extension (Annex H), and/or AVC with the SVC extension (Annex G). Additionally, these implementations and features may be used in the context of another standard (existing or future), or in a context that does not involve a standard.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C" and "at least one of A, B, or C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Additionally, many implementations may be implemented in one or more of an encoder (for example, the encoder 1102), a decoder (for example, the decoder 1206), a post-processor (for example, the processor 1208) processing output from a decoder, or a pre-processor (for example, the processor 1101) providing input to an encoder. Further, other implementations are contemplated by this disclosure.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, depth or disparity processing, and other processing of images and related depth and/or disparity maps. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

**Claims**

1. A method, comprising the steps of:

receiving a stereo video and a disparity map corresponding to the stereo video, the disparity map including at least a first sample at a first location indicating a first disparity value at the first location and a second sample at a second location that does not indicate an actual disparity value at the second location (1007); determining disparity information by correlating the second sample with a respective one of a plurality of pre-determined disparity conditions and processing the stereo video based on the disparity information (1095).

2. The method of claim 1, wherein the disparity map is a dense disparity map, and wherein the determined disparity information relates to a pixel associated with the sample.

3. The method of claim 1, wherein the disparity information relates to a group of pixels associated with the sample.

4. The method of claim 1, wherein the sample is selected from one or more alternatives to provide the disparity information.

5. The method of claim 1, wherein the first sample is at a neighboring location of the second sample

6. The method of claim 5, wherein the first sample is to the left or to the right of the second sample.

7. The method of claim 1, wherein the disparity map further includes a third sample at a third location indicating a third disparity value at the third location, and wherein the disparity information indicating whether the actual disparity value that corresponds to the second location is less than or greater than an interpolation between the first disparity value and the third disparity value.

8. The method of claim 1, wherein the processing includes one of placing overlay information, adjusting 3D effects, generating warnings, and synthesizing new views.

9. A method, comprising the steps of:

receiving a stereo video (907); processing disparity information corresponding to the stereo video (935, 945, 950, 993, 965, 970, 983, 986, 989); and generating a disparity map based on the disparity information, the disparity map including at least a first at a first location indicating a first disparity at the first location and a second sample at a second location that does not indicate an actual disparity value at the second location (996, 998), wherein the second sample is set to indicate a respective one of a plurality of pre-determined disparity conditions.

10. The method of claim 10, wherein the disparity map is a dense disparity map.

11. The method of claim 10, wherein the sample is selected from one or more alternatives to provide the disparity information.

12. An apparatus, comprising:

an input for receiving a stereo video and a disparity map corresponding to the stereo video, the disparity map including at least a first sample at a first location indicating a first disparity value at the first location and a second sample at a second location that does not indicate an actual disparity value at the second location; and a processor configured to determine disparity information by correlating the second sample with a respective one of a plurality of pre-determined disparity conditions.

13. A processor readable medium having stored thereupon instructions for causing one or more processors to collectively perform the steps of the method of claim 1.

14. An apparatus, comprising:

an input for receiving a stereo video; a processor configured to process disparity information corresponding to the stereo video; and an output stage configured to generate a disparity map based on the disparity information, the disparity map including at least a first sample at a first location indicating a first disparity value at the first location and a second sample at a second location that does not indicate an actual disparity value at the second location, wherein the second sample is set to indicate a respective one of a plurality of pre-determined disparity conditions.

## Patentansprüche

1. Verfahren, das die folgenden Schritte umfasst:

   Empfangen eines Stereovideos und einer Disparitätskarte, die dem Stereovideo entspricht, wobei die Disparitätskarte mindestens einen ersten Abtastwert an einem ersten Ort, der einen ersten Disparitätswert an dem ersten Ort angibt, und einen zweiten Abtastwert an einem zweiten Ort, der einen tatsächlichen Disparitätswert an dem zweiten Ort nicht angibt, enthält (1007);
   Bestimmen von Disparitätsinformationen durch Korrelieren des zweiten Abtastwerts mit einer jeweiligen von mehreren vorgegebenen Disparitätsbedingungen; und
   Verarbeiten des Stereovideos auf der Grundlage der Disparitätsinformationen (1095).

2. Verfahren nach Anspruch 1, wobei die Disparitätskarte eine dichte Disparitätskarte ist und wobei sich die vorgegebenen Disparitätsinformationen auf ein dem Abtastwert zugeordnetes Pixel beziehen.

3. Verfahren nach Anspruch 1, wobei sich die Disparitätsinformationen auf eine Gruppe von Pixeln, die dem Abtastwert zugeordnet sind, beziehen.

4. Verfahren nach Anspruch 1, wobei der Abtastwert aus einer oder mehreren Alternativen zum Bereitstellen der Disparitätsinformationen ausgewählt wird.

5. Verfahren nach Anspruch 1, wobei der erste Abtastwert an einem Nachbarort des zweiten Abtastwerts ist.

6. Verfahren nach Anspruch 5, wobei der erste Abtastwert links oder rechts des zweiten Abtastwerts ist.

7. Verfahren nach Anspruch 1, wobei die Disparitätskarte ferner einen dritten Abtastwert an einem dritten Ort, der einen dritten Disparitätswert an dem dritten Ort angibt, enthält, und wobei die Disparitätsinformationen angeben, ob der tatsächliche Disparitätswert, der dem zweiten Ort entspricht, kleiner oder größer als eine Interpolation zwischen dem ersten Disparitätswert und dem dritten Disparitätswert ist.

8. Verfahren nach Anspruch 1, wobei die Verarbeitung das Anordnen von Überlagerungsinformationen oder das Einstellen von 3D-Effekten oder das Erzeugen von Warnungen oder das Synthetisieren neuer Ansichten enthält.

9. Verfahren, das die folgenden Schritte umfasst:

   Empfangen eines Stereovideos (907);
   Verarbeiten von Disparitätsinformationen, die dem Stereovideo entsprechen (935, 945, 950, 993, 965, 970, 983, 986, 989); und
   Erzeugen einer Disparitätskarte auf der Grundlage der Disparitätsinformationen, wobei die Disparitätskarte mindestens einen ersten Abtastwert an einem ersten Ort, der eine erste Disparität an dem ersten Ort angibt, und einen zweiten Abtastwert an einem zweiten Ort, der einen tatsächlichen Disparitätswert an dem zweiten Ort (996, 998) nicht angibt, enthält, wobei der zweite Abtastwert so eingestellt wird, dass er eine jeweilige von mehreren vorgegebenen Disparitätsbedingungen angibt.

10. Verfahren nach Anspruch 10, wobei die Disparitätskarte eine dichte Disparitätskarte ist.

11. Verfahren nach Anspruch 10, wobei der Abtastwert aus einer oder mehreren Alternativen zum Bereitstellen der Disparitätsinformationen ausgewählt wird.

12. Vorrichtung, die umfasst:

   einen Eingang zum Empfangen eines Stereovideos und einer Disparitätskarte, die dem Stereovideo entspricht, wobei die Disparitätskarte mindestens einen ersten Abtastwert an dem ersten Ort, der einen ersten Disparitätswert an einem ersten Ort angibt, und einen zweiten Abtastwert an einem zweiten Ort, der einen tatsächlichen Disparitätswert an dem zweiten Ort nicht angibt, enthält; und

einen Prozessor, der dafür konfiguriert ist, durch Korrelieren des zweiten Abtastwerts mit einer jeweiligen von mehreren vorgegebenen Disparitätsbedingungen Disparitätsinformationen zu bestimmen.

13. Prozessorlesbares Medium, in dem Anweisungen gespeichert sind, um zu veranlassen, dass ein oder mehrere Prozessoren zusammen die Schritte des Verfahrens nach Anspruch 1 ausführen.

14. Vorrichtung, die umfasst:

einen Eingang zum Empfangen eines Stereovideos;
einen Prozessor, der dafür konfiguriert ist, Disparitätsinformationen, die dem Stereovideo entsprechen, zu verarbeiten; und
eine Ausgangsstufe, die dafür konfiguriert ist, auf der Grundlage der Disparitätsinformationen eine Disparitätskarte zu erzeugen, wobei die Disparitätskarte mindestens einen ersten Abtastwert an einem ersten Ort, der einen ersten Disparitätswert an dem ersten Ort angibt, und einen zweiten Abtastwert an einem zweiten Ort, der einen tatsächlichen Disparitätswert an dem zweiten Ort nicht angibt, enthält, wobei der zweite Abtastwert so eingestellt wird, dass er eine jeweilige von mehreren vorgegebenen Disparitätsbedingungen angibt.

## Revendications

1. Procédé comprenant les étapes suivantes :

réception d'une vidéo stéréo et d'une carte de disparité correspondant à la vidéo stéréo, la carte de disparité incluant au moins un premier échantillon à un premier emplacement indiquant une première valeur de disparité au premier emplacement et un deuxième échantillon à un deuxième emplacement qui n'indique pas de valeur de disparité réelle au deuxième emplacement (1007) ;
détermination d'informations de disparité par l'établissement d'une corrélation entre le deuxième échantillon et l'une respective d'une pluralité de conditions de disparité prédéterminées et le traitement de la vidéo stéréo d'après les informations de disparité (1095).

2. Procédé selon la revendication 1, dans lequel la carte de disparité est une carte de disparité dense, et dans lequel les informations de disparité déterminées se rapportent à un pixel associé à l'échantillon.

3. Procédé selon la revendication 1, dans lequel les informations de disparité se rapportent à un groupe de pixels associés à l'échantillon.

4. Procédé selon la revendication 1, dans lequel l'échantillon est sélectionné à partir d'une ou de plusieurs alternatives pour fournir les informations de disparité.

5. Procédé selon la revendication 1, dans lequel le premier échantillon se trouve à un emplacement voisin du deuxième échantillon.

6. Procédé selon la revendication 5, dans lequel le premier échantillon se trouve à gauche ou à droite du deuxième échantillon.

7. Procédé selon la revendication 1, dans lequel la carte de disparité inclut en outre un troisième échantillon à un troisième emplacement indiquant une troisième valeur de disparité au troisième emplacement, et dans lequel les informations de disparité indiquent si la valeur de disparité réelle qui correspond au deuxième emplacement est inférieure ou supérieure à une interpolation entre la première valeur de disparité et la troisième valeur de disparité.

8. Procédé selon la revendication 1, dans lequel le traitement inclut le positionnement d'informations de superposition, le réglage d'effets 3D, la génération d'avertissements ou la synthétisation de nouvelles vues.

9. Procédé, comprenant les étapes suivantes :

réception d'une vidéo stéréo (907) ;

traitement des informations de disparité correspondant à la vidéo stéréo (935, 945, 950, 993, 965, 970, 983, 986, 989) ; et

génération d'une carte de disparité d'après les informations de disparité, la carte de disparité incluant au moins un premier échantillon à un premier emplacement indiquant une première disparité au premier emplacement et un deuxième échantillon à un deuxième emplacement qui n'indique pas de valeur de disparité réelle au deuxième emplacement (996, 998), où le deuxième échantillon est défini pour indiquer l'une respective d'une pluralité de conditions de disparité prédéterminées.

**10.** Procédé selon la revendication 10, dans lequel la carte de disparité est une carte de disparité dense.

**11.** Procédé selon la revendication 10, dans lequel l'échantillon est sélectionné à partir d'une ou de plusieurs alternatives pour fournir les informations de disparité.

**12.** Appareil comprenant :

une entrée pour recevoir une vidéo stéréo et une carte de disparité correspondant à la vidéo stéréo, la carte de disparité incluant au moins un premier échantillon à un premier emplacement indiquant une première valeur de disparité au premier emplacement et un deuxième échantillon à un deuxième emplacement qui n'indique pas de valeur de disparité réelle au deuxième emplacement ; et

un processeur configuré pour déterminer des informations de disparité en établissant une corrélation entre le deuxième échantillon et l'une respective d'une pluralité de conditions de disparité prédéterminées.

**13.** Support lisible par un processeur sur lequel sont stockées des instructions indiquant à un ou plusieurs processeurs d'exécuter collectivement les étapes du procédé selon la revendication 1.

**14.** Appareil comprenant :

une entrée pour recevoir une vidéo stéréo ;

un processeur configuré pour traiter les informations de disparité correspondant à la vidéo stéréo ; et

un étage de sortie configuré pour générer une carte de disparité d'après les informations de disparité, la carte de disparité incluant au moins un premier échantillon à un premier emplacement indiquant une première valeur de disparité au premier emplacement et un deuxième échantillon à un deuxième emplacement qui n'indique pas de valeur de disparité réelle au deuxième emplacement, où le deuxième échantillon est défini pour indiquer l'une respective d'une pluralité de conditions de disparité prédéterminées.

FIG. 1

*FIG. 2*

*FIG. 3*

FIG. 4

500

510                stereo video,        520                      530                  540
                   disparity map

┌──────────┐                     ┌──────────────┐         ┌──────────────┐      ┌──────────┐
│          │                     │     View     │         │    Depth     │      │          │
│  Input   │ ─────────────────▶  │ Interpolation│ ──────▶ │  Adjustment  │ ───▶ │ Display  │
│          │                     │ /Extrapolation│        │              │      │          │
└──────────┘                     └──────────────┘         └──────────────┘      └──────────┘
                                                                 ▲  user
                                                                 │  preference
                                                          ┌──────────────┐
                                                          │     User     │
                   FIG. 5                                 │  Interface   │
                                                          └──────────────┘
                                                                 550

FIG. 6

FIG. 7

FIG. 8

FIG. 9

FIG. 10

1108

Storage

1100

1101

Input
video

1102

1104

Output
signal

Processor

Encoder

Transmitter

Modulator

—1106

Video transmission system

FIG. 11

1200

Input
signal

1202

1206

Output
video

1208

Receiver

Demodulator

1204

Decoder

Processor

Video receiving system

1207

Storage

FIG. 12

**EP 2 553 932 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61319973 B

- WO 2007052191 A